**Europäisches Patentamt**

**European Patent Office**

**Office européen des brevets**

(19)

(11) Publication number: **0 506 010 B1**

(12) # EUROPEAN PATENT SPECIFICATION

(45) Date of publication of patent specification: **06.09.95**　(51) Int. Cl.6: **B01D 61/36**, B01D 69/02, B01D 53/22

(21) Application number: **92105130.6**

(22) Date of filing: **25.03.92**

(54) **Method for separating a liquid component from a solution containing two or more liquid components.**

(30) Priority: **25.03.91 JP 59863/91**
**25.03.91 JP 59864/91**

(43) Date of publication of application:
**30.09.92 Bulletin 92/40**

(45) Publication of the grant of the patent:
**06.09.95 Bulletin 95/36**

(84) Designated Contracting States:
**DE FR GB NL**

(56) References cited:
**EP-A- 0 273 267**
**EP-A- 0 346 739**
**DE-C- 851 048**
**US-A- 4 978 430**

(73) Proprietor: **Lignyte Co., Ltd.**
**1-4-62, Chibune**
**Nishiyodogawa-ku**
**Osaka (JP)**

(72) Inventor: **Uragami, Tadashi**
**6-27-9, Aomadani-Higashi**
**Mino-shi,**
**Osaka (JP)**
Inventor: **Tanaka, Yoshiaki**
**4-5-8, Chiyoda**
**Takaishi-shi,**
**Osaka (JP)**

(74) Representative: **Goddar, Heinz J., Dr.**
**FORRESTER & BOEHMERT**
**Franz-Joseph-Strasse 38**
**D-80801 München (DE)**

**Description**

TECHNICAL FIELD

The present invention relates to a method for separating a liquid component from a solution containing two or more liquid components through the use of a permeable membrane, and more particularly to an improved method of separating the component in vapor-to-vapor permeation environment.

BACKGROUND ART

As a method of separating a particular liquid component from a solution or mixture such as an organic liquid containing two or more liquid components there has been developed a pervaporation (permeation evaporation) method. The principle of the permeation method utilizes a separation vessel divided into an upper solution chamber and a lower vacuum chamber by means of a permeable membrane. By reducing a pressure in the vacuum chamber while keeping the solution introduced into the solution chamber in contact with the membrane, a particular component in the liquid solution will permeate and diffuse through the permeable membrane selectively in preference to the other components so that the component to be separated selectively permeates through the membrane and evaporates from the surface of the permeable membrane into the vacuum chamber. In this permeation method, however, because of that the liquid solution is kept in direct contact with the permeable membrane to effect the permeation in a liquid-to-vapor phase environment, there arises a serious problem that the permeable membrane which is generally made from a macromolecular material is likely to be swelled due to the direct contact with the solution. When the permeable membrane is swelled, its permeability will be considerably degraded to thereby lower the separation efficiency to an unacceptable level.

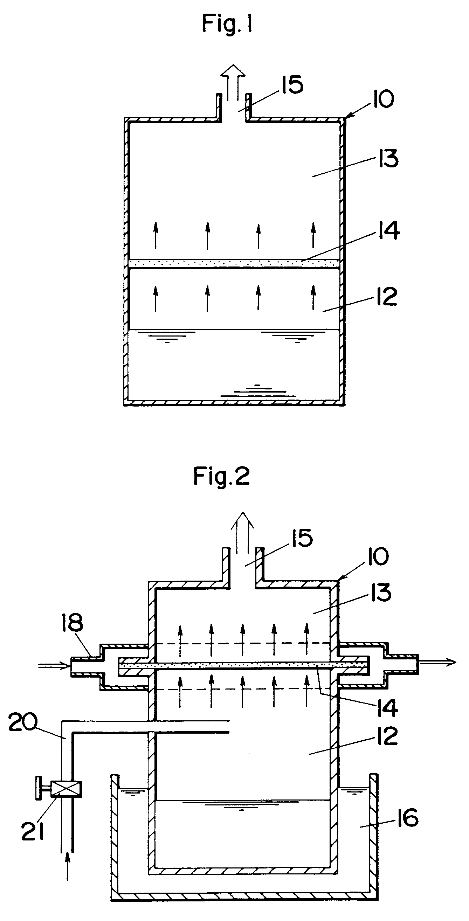

To overcome the above problem, the applicant has proposed in prior European patent application No. 87 118319.0 and No. 89 110237.8 an evapomeation (evaporation permeation) method which is directed to effect the permeation in vapor-to-vapor phase environment. That is, as schematically shown in FIG. 1, the evapomeation method utilizes a like vessel **10** divided into a lower solution chamber **12** and an upper vacuum chamber **13** by a non-porous permeable membrane **14** and effects the permeation separation while keeping the solution **S** from which a particular component is to be separated out of contact with the permeable membrane **14.** Thus, the vapors of the particular component will selectively permeate through the membrane **14** in a vapor phase into the vacuum chamber **13** when drawn by vacuum through the membrane **14.** With this result, the evapomeation method can be free from the swelling which is seen in the conventional pervaporation method and therefore prevents a lowering in separation efficiency. Nevertheless, the evapomeation method may be found insufficient due to limited separation efficiency inherent to the permeable membrane employed. That is, since the separation relies upon diffusion permeation of the component into the membrane which occurs only at a relatively slow rate, it is not expected to separate the liquid components at a high rate sufficient for industrial application.

DISCLOSURE OF THE INVENTION

The present invention eliminates the above problems and provides an improved permeation separation method for further enhancing separation efficiency. The method of the present invention utilizes a vessel which is divided by a permeable membrane into a solution chamber and a vacuum chamber. The solution is placed in the solution chamber out of direct contact with the permeable membrane. Then, a vacuum is applied to the vacuum chamber to evaporate the solution in the solution chamber and draw the resulting vapors through the permeable membrane into the vacuum chamber, whereby the components are separated selectively through the membrane in a vapor-to-vapor phase environment. The characterizing feature of the present invention resides in that the permeable membrane is a porous membrane which exhibits an affinity stronger to the particular liquid components intended to be separated than to the other components. With this technique, it is readily possible to remarkably increase the separation rate up to an industrially practical level. Such high separation rate is believed to come from that the particular liquid component reaching into contact with the membrane is allowed to enter minute pores in the membrane readily due to its strong affinity to the membrane, while the other liquid components exhibiting less affinity to the membrane are rejected from the membrane and are difficult to proceed into the minute pores thereof. The particular liquid component thus allowed to enter the minute pores are hastened to pass therethrough by vacuum applied through the membrane from the vacuum chamber. Therefore, the particular liquid component is separated at an increased rate which is far greater than that expected in the prior evapomeation method relying upon the diffusion permeation of the component into the non-porous membrane.

Accordingly, it is a primary object of the present invention to provide an improved permeation separation method which is capable of separating a particular liquid component from a solution containing two or more liquid components at such a remarkably increased separation rate sufficient as to ensure industrial practicability.

While applying the vacuum through the membrane for separation of the particular component, a suitable gas may be introduced into the solution chamber for enhancing the separation and therefore further increasing the separation efficiency, which is therefore another object of the present invention.

The affinity is determined by a critical surface tension and can be stronger to the particular liquid component than to the others when the critical surface tension is closer to a surface tension of the particular liquid component than to those of the others. In the preferred embodiment, the permeable membrane is selected to have a critical surface tension which is greater than a surface tension of the particular component to be separated and is less than those of the other components. Preferably, the membrane is formed to have the pores of $1 \times 10^{-3}$ to 5 $\mu$m in average diameter and have a porosity of at least 5 %.

When separating the particular component having a lower boiling temperature than those of the other liquid components, it is mostly preferred to cool the membrane while heating the solution in the solution chamber in order to increase the separation ratio. This is because that when reaching a cooled zone adjacent to the permeable membrane the vapors of the components having a higher boiling point are likely to aggregate than that of the intended component having a lower boiling point to thereby form a greater aggregation of molecules which is difficult to enter the pores of the membrane or even cause to return back to the liquid phase. Thus, the vapors of the intended component having the lower boiling point are allowed to preferentially enter or permeate through the membrane while those of the other components are rejected so that the vapors of the intended component can be collected at a greater concentration or efficiency in the vacuum chamber than those of the components not intended.

It is therefore a further object of the present invention to provide an improved permeation separation method which is capable of separating the particular liquid component having a lower boiling point than the other components at an increased separation efficiency.

The above and other objects and advantages of the present invention will become more apparent from the following description of the invention with reference to the attached drawings.

BRIEF DESCRIPTION OF THE DRAWINGS

FIG. 1 is a schematic view illustrating a basic concept of the evapomeation separation method;
FIG. 2 is a schematic view of an apparatus employed in the present invention for illustrating a separation method in accordance with a preferred embodiment of the present invention;
FIG. 3 is a graph illustrating separation efficiency and concentration of the permeated liquid component being separated in relation to the supplying amount of the air being introduced in a solution chamber of the apparatus.

MODES FOR CARRYING OUT THE INVENTION

Referring to FIG. 1 which illustrates the principle of the "evapomeation (evaporation permeation)" separation method of the present invention, a separation vessel **10** is divided by means of a permeable membrane **14** into a lower solution chamber **12** and an upper vacuum chamber **13**. A solution **S**, for example, an organic solution containing two or more volatile or evaporizable components is introduced into the solution chamber **12** and is kept out of direct contact with the permeable membrane **14**. As shown in detail in FIG. 2, the vacuum chamber **13** is provided with a port **15** which is connected to a source of vacuum such as a vacuum pump for evacuating the vacuum chamber and in turn for evaporating the solution **S** in the solution chamber **12** and drawing the resulting vapors through the permeable membrane **14**. The vapors permeating through the membrane **14** into the vacuum chamber **13** is collected or recovered by a suitable manner. Projecting into the solution chamber **12** is a pipe **20** with a valve **21** for supplying a suitable gas, for example, air, nitrogen or the like into the solution chamber **12** above the liquid level of the solution **S**. The solution is, for example, an aqueous solution of alcohol, in which case alcohol concentration can be increased by selectively permeate the alcohol in preference to the water. The present invention is not limited to the separation of the water-alcohol solution and can be widely utilized for separation of a particular liquid component from a solution containing two or more liquid components. Since the permeable membrane **14** allows a particular component to selectively permeate in preference to the

EP 0 506 010 B1

others, it is readily possible to complete the separation either by collecting the component having passed into the vacuum chamber **13** through the permeable membrane **14** or by collecting the remaining solution in the solution chamber **12** from which the particular component has been removed.

The permeable membrane **14** utilized in the present invention is a porous membrane exhibiting a stronger affinity to the particular liquid component intended to be separated than to the other liquid component or components contained in the solution. That is, the membrane **14** is selected to have a critical surface tension $\gamma_C$ which is closer to the particular liquid component than to the other component or components in the solution. The term "critical surface tension" is defined to be equal to a surface tension $\gamma_L$ of a liquid with respect to the solid surface, in this instance, the surface of the membrane when contact angle $\Theta$ is 0 ($\cos\Theta$ = 1), and can be well indicative of wettability of a specific membrane to the liquid components so that the membrane can be said to be readily wetted by or have a strong affinity to a particular liquid component when the critical surface tension $\gamma_C$ is closer to or greater than the surface tension of that liquid component than that of the other liquid component or components contained in the solution. For example, when separating the particular liquid component A from a solution containing other liquid components B, C, and so on, the membrane is selected to have a critical surface tension $\gamma_C$ which is closer to the surface tension $\gamma_L$ of the particular liquid component than to those of the other components B, C, and so on. Preferably, the membrane is selected to have a critical surface tension $\gamma_C$ which is greater than the surface tension $\gamma_L$ of the particular liquid component A and at the same time less than those of the other liquid components B, C, and so on.

Table 1 shows surface tension of several liquid components which may form a liquid solution from which a particular component is to be separated through the membrane. For instance, when the membrane is selected to have critical surface tension $\gamma_C$ which is closer to surface tension $\gamma_L$ of water than those to the other listed components, water can be separated from the other listed components. When the membrane is selected to have critical surface tension $\gamma_C$ which is between surface tension $\gamma_L$ of the water and that of another listed component, the separation between the water and another component can be made efficiently.

Table 1

| Component | Surface tension (dyne/cm) |
|---|---|
| ethylether | 17.0 |
| ethanol | 22.6 |
| acetone | 23.3 |
| ethyl acetate | 23.8 |
| tetrahydrofuran | 26.4 |
| carbon tetrachloride | 26.8 |
| toluene | 28.4 |
| benzene | 28.9 |
| methyl cellosolve | 35.0 |
| dimethyl formaldehyde | 35.2 |
| propylene carbonate | 40.8 |
| water | 72.8 |

The membrane **14** may be fabricated from, although not limited to, polypropylene, polytetrafluoroethylene, poly carbonate, and the like to be a porous membrane having a porosity of 5% or more and formed with minute pores having an average diameter of $1 \times 10^{-3}$ to 5 $\mu$m. For example, "Celguard" or "Duraguard" from Hoechst Corp. is available as polypropylene membrane, "Fluoropore" from Sumitomo Denko K.K. is available as the polytetrafluoroethylene membrane, and "Nucleipore" from Nucleipore Corp. is available as the polycarbonate membrane. The minute pores may not be strictly circular and may be of various non-circular configuration. In this sense the diameter of the pores is determined as that of a circular pore having an equivalent opening area to that of the non-circular pore. Above 5 $\mu$m of the average pore

4

diameter, the membrane will pass the particular liquid component and the other liquid components together, failing to selectively permeate the particular component. Below $1 \times 10^{-3}$ $\mu$m of the average pore diameter, the other hand, the particular component is reluctant to pass through the pores to thereby lower separation rate down to a practically unacceptable level. Further, below 5% of porosity the membrane is expected to permeate only a limited amount of the particular liquid component per unit time, making it difficult to obtain good separation rate of a practically acceptable level.

Turning back to FIG. 2, when the vacuum chamber **13** is evacuated through the port from the vacuum pump, the vacuum is applied also to the solution chamber **12** through the membrane **14** to thereby evaporate the solution and feed the vapors of the liquid components of the solution to reach the membrane **14**. At this condition, the membrane **14** exhibits a stronger affinity to a particular liquid component having surface tension $\gamma_L$ closer to the critical surface tension $\gamma_C$ of the membrane than to the other liquid components so that the membrane **14** is wetted with that particular liquid component while substantially rejecting the other liquid component. Particularly, the membrane **14** is wetted substantially only with the particular liquid component having surface tension $\gamma_L$ less than the critical surface tension $\gamma_C$ of the membrane **14** while rejecting the other component having surface tension $\gamma_L$ greater than the critical surface tension $\gamma_C$ of the membrane **14**. Accordingly, only the liquid component having the surface tension $\gamma_L$ closer to and less than the critical surface tension $\gamma_C$ of the membrane **14** is allowed to proceed through the minute pores of the membrane **14** into the vacuum chamber **13**, while the other components having surface tension $\gamma_L$ which is far away from and greater than the critical surface tension $\gamma_C$ are rejected by the membrane **14** and substantially inhibited from passing through the pores of the membrane **14** into the vacuum chamber **13**. In this manner, the particular liquid component having surface tension $\gamma_L$ closer to and less than the critical surface tension $\gamma_C$ can be separated through the membrane and can be collected in an increased concentration from the vacuum chamber. The other liquid components can be collected from the solution chamber **12,** when required. The separation through the permeable membrane **14** with the minute pores in accordance with the present invention can be effected at an increased rate far greater than the prior evapomeation separation method relying upon the non-porous permeable membrane as proposed in the prior European patent application No. 87 118319.0 and No. 89 9110273.8

It should be noted here that during the operation of permeating the particular liquid component through the membrane **14**, it is preferred to supply a suitable gas, for example, air or nitrogen by way of pipe **20** into the solution chamber **12** for improving separation efficiency or enhancing the concentration of the component separated from the solution. Although not clear, such increased separation rate is assumed to result from the followings. The gas supplied into the solution chamber **12** is drawn into the vacuum chamber **13** through the minute pores of the membrane **14** due to the vacuum being applied to the vacuum chamber **13**. Since the molecules of the gas is far smaller than those of the vapors of the liquid components, the gas is readily fed through the membrane in preference to the liquid components to thereby leave the liquid components accumulated in the vicinity of the membrane. Whereby the liquid components can have more chances to be in contact with the membrane **14** and are therefore subjected sufficiently to the above separation mechanism due to the difference between the critical surface tension $\gamma_C$ and the surface tension $\gamma_L$ of the liquid components. Anyhow, the concentration of the liquid component can be increased by supplying a suitable gas into the solution chamber **12** at the time of applying the vacuum through the membrane **14.** Although the separation efficiency or the concentration can be increased with the increase in the supplying amount of the gas, the separation rate will decrease correspondingly to eventually lower the separation efficiency. Therefore, it is required to choose the supplying amount of the gas per unit time for well balancing the concentration of the separated liquid component and the separation rate for optimum separation efficiency.

When separating a liquid solution containing two or more liquid components having different boiling points, for example an aqueous solution of ethanol (boiling point of which is 78.3 °C) or of methanol (boiling point of which is 64.1), it is preferred to heat the solution **S** in the solution chamber and at the same time to cool the membrane **14** to provide a considerable temperature difference therebetween in order to separate a particular liquid component having a lower boiling point from the solution. For this purpose, the solution chamber **12** is surrounded by a heating bath **16,** as shown in FIG. 2. The heating of the solution **S** may be effected alternatively by providing a heating jacket around the solution chamber **12,** providing an immersion heater in the solution chamber **12,** or the like heating device. The heating of the solution **S,** in the present invention, means to heat the solution **S** to a temperature above that of an environment or room temperature. **14.** A cooling jacket **18** is provided to surround the permeable membrane **14** in order to cool the membrane **14** by a cooling medium continuously fed through the jacket **18**. In this case, the membrane **14** is selected to be capable of permeating the particular component of the lower boiling point in preference to the other. That is, the membrane **14** has a critical surface tension $\gamma_C$ which is closer to a surface tension $\gamma_L$ of the

particular component having the lower boiling point than to that of the other component and at the same time which is greater than the surface tension $\gamma_L$ of the particular component having the lower boiling point and less than that of the other component $\gamma_L$.

When applying the vacuum through the membrane **14** while cooling the membrane **14** and heating the solution **S**, the vapors of the component having a lower boiling point than the other reach the membrane in a greater concentration than the other due to the difference of the boiling points and are allowed to pass through the membrane **14** in preference to the other as the membrane **14** is readily wetted with the liquid component having the lower boiling point rather than the other component. Thus, the component having the lower boiling point are drawn into the vacuum chamber **13** in preference to the other. For example, the vapors of ethanol or methanol having a lower boiling point than water are caused to permeate through the membrane in preference to the water, to thereby increase ethanol or methanol concentration within the vacuum chamber **13**. By cooling the permeable membrane **14** while heating the solution **S**, a more enhanced separation could result. The exact reason or mechanism for such enhanced separation is not known, but it is assumed that the vapors of the components having a higher boiling point are most likely to aggregate when reaching adjacent the cooled membrane and return to liquid or at least form a large sized aggregation which is difficult to permeate through the membrane, thus enabling substantially only the vapors of the component having a lower boiling point to permeate through the membrane. Since the membrane **14** is constantly exposed to the vapors of the solution, the membrane is correspondingly heated to reduce the above cooling effect. Nevertheless, the gas being supplied into the solution chamber **12** and feed through the membrane can act to cool or cancel the heating by the vapors, thereby maintaining the enhanced separation efficiency through the membrane **14**. It should be noted at this time that, although the apparatus of FIG. 2 is designed to cool the permeable membrane **14** and therefore the adjacent zones on the opposite sides thereof, the cooling could be limited only to the zone adjacent the solution side of the permeable membrane **14** for achieving the above enhanced separation, and the cooling is not necessarily made to the opposite zone in the vacuum chamber or the permeable membrane itself. Therefore, any other cooling scheme or means could be utilized to effect such limited cooling while retaining the equally enhanced separation.

The present invention will be discussed with reference to the following examples, which are provided by way of illustration and not by way of limitation. All percent and parts are by weight.

### Example 1

A 10 wt% aqueous solution of ethanol was separated by the use of a 25 $\mu$m thick porous permeable membrane of polypropylene which is available from Hoechst Corp. under the tradename of "Duraguard #2400" and has a critical surface tension 35 dyne/cm with a porosity of 38 %. The membrane has evenly distributed minute elliptic pores having a major diameter of 0.125 $\mu$m and a minor diameter of 0.05 $\mu$m with an average diameter of 0.079 $\mu$m. The membrane **14** was fixed in the apparatus of FIG. 2 to separate the interior thereof into a 350 cc volume solution chamber **12** and a 100 cc volume vacuum chamber **13** with an effective separation surface area of 20 cm$^2$. 100 cc of the water-ethanol solution was placed in the solution chamber **12** out of direct contact with the membrane **14**. The separation was carried out by keeping the vacuum chamber **13** at a reduced pressure of $10^{-1}$ Torr. while heating the solution by keeping the heating bath **16** at 40 °C and cooling the membrane **14** by the cooling jacket **18** kept at 0 °C, in order to recover an ethanol-rich solution from the vacuum chamber **13** by selective permeation through the membrane **14** due to the difference in the surface tensions and also in the boiling points between ethanol and water. The surface tension and the boiling point are 22.6 dyne/cm and 78.3 °C for ethanol and 72.8 dyne/cm and 100 °C for water.

### Example 2

Separation was made for a 10 wt% aqueous solution of ethanol in an identical manner as in Example 1 to recover an ethanol rich solution in the vacuum chamber except that a 60 $\mu$m thick porous poly-tetrafluoroethylene membrane was utilized. The membrane, which is available from Sumitomo Denko K.K., Japan under the tradename of "Fluoropore FP-010", has a critical surface tension of 28.5 dyne/cm with a porosity of 70%, and is formed with evenly distributed minute circular pores having an average diameter of 0.10 $\mu$m.

Examples 3 to 8

Separation was made for a 10 wt% aqueous solution of ethanol in an identical manner as in Example 1 to recover an ethanol rich solution in the vacuum chamber except that the solution chamber **12** was constantly supplied with an air of 25 °C at a rate of 8, 10, 20, 32, 44, and 63 mℓ/min, respectively.

Comparative Example

Like separation was made for a **10** wt% aqueous solution of ethanol in an identical manner as in Example **1** to recover an ethanol rich solution in the vacuum chamber except that a non-porous polydimethylsiloxane membrane was utilized which is available from Toray Dow Corning Corp. under the tradename of "SE-9520" and shows selective permeability to ethanol in preference to water.

The ethanol-rich solutions recovered in Examples 1 to 8 and Comparative Example were analyzed to determine an ethanol concentration of the recovered solution, a permeation rate at which the solution pass through the membrane, and a separation factor $\alpha$ which is defined by the following equation:

$$\alpha = \frac{Y_{ETOH}/Y_{H2O}}{X_{ETOH}/X_{H2O}}$$

wherein $X_{H2O}$ and $X_{ETOH}$ are fractions of water and ethanol respectively in aqueous ethanol solution placed in the solution chamber **12**, while $Y_{H2O}$ and $Y_{ETOH}$ are fractions of water and ethanol respectively collected in the vacuum chamber **13**. As apparent from the above relation, when $\alpha$ is greater than 1, it means that ethanol has passed through the membrane **14** in a greater amount than water and therefore that ethanol is allowed to pass preferentially through the membrane to a larger extent as the value $\alpha$ becomes greater.

Thus obtained separation factor for Examples and Comparative Examples are listed in Table 2 together with the ethanol concentration in the recovered solution and the permeation rate. As seen in Table 2, the permeation rate of Examples 1 to 8 is remarkably increased as compared to those of Comparative Example, which demonstrates that ethanol can be separated at a far greater rate and therefore in a greater efficiency sufficiently for assuring industrial practicability. Further, the permeation rate as well as the ethanol concentration can be both improved in Examples 3 to 8 in which the air is being supplied to the solution chamber during the separation process.

Table 2

|  | Supplying amount of air [mℓ/min] | Ethanol concentration of recovered solution [wt%] | Separation factor [$\alpha$] | permeation rate [kg/m$^2 \cdot$h] |
|---|---|---|---|---|
| Example 1 | 0 | 51.6 | 9.6 | 10.6 |
| Example 2 | 0 | 44.0 | 7.1 | 19.2 |
| Example 3 | 8 | 67.3 | 18.5 | 6.2 |
| Example 4 | 10 | 68.4 | 19.5 | 7.3 |
| Example 5 | 20 | 70.1 | 21.1 | 5.1 |
| Example 6 | 32 | 74.1 | 25.7 | 3.4 |
| Example 7 | 44 | 75.1 | 27.1 | 2.7 |
| Example 8 | 63 | 76.3 | 29.0 | 1.6 |
| Comparative Example | - | 86.2 | 56.2 | 0.008 |

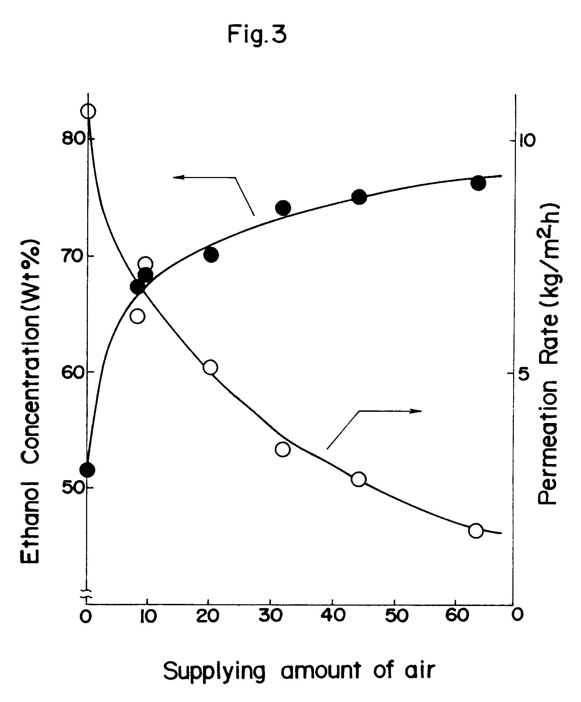

FIG. 3 illustrates the ethanol concentration (indicated by black dots) and the permeation rate (indicated by white dots) in relation to the change in the supplying amount of the air. From this figure, it is confirmed that the ethanol concentration increases with the increase in the supplying amount of the air, but the permeation rate will decrease correspondingly. Therefore, it is required to limit the supplying amount of the air in order to well balance the concentration and the permeation rate for optimum separation efficiency.

The features disclosed in the foregoing description, in the claims and/or in the accompanying drawings may, both, separately and in any combination thereof, be material for realising the invention in diverse forms thereof.

LIST OF REFERENCE NUMRERALS

10    vessel
12    solution chamber
13    vacuum chamber
14    permeable membrane
15    port
16    heating bath
18    cooling jacket
20    pipe
21    valve

**Claims**

1. A method for separating a particular liquid component from a solution containing two or more liquid components, said method comprises:
   providing a vessel (10) divided by a permeable membrane (14) into a solution chamber (12) and a vacuum chamber (13);
   placing said solution into said solution chamber (12) out of direct contact with said permeable membrane (14); and
   applying a vacuum to said vacuum chamber (13) to evaporate the solution in said solution chamber (12) and draw the resulting vapors through said permeable membrane (14) into said vacuum chamber (13) in order to selectively permeate said particular component through said membrane (14) in a vapor-to-vapor phase environment,
   characterized in that
   said permeable membrane (14) is a porous membrane with pores of $1 \times 10^{-3}$ to 5 $\mu$m in average diameter and a porosity of at least 5 %., selected to have a critical surface tension which is closer to a surface tension of said particular component to be separated than those of the other components.

2. The method as set forth in claim 1, wherein said porous membrane (14) is selected to have a critical surface tension which is greater than a surface tension of said particular component to be separated and is less than those of the other components.

3. The method as set forth in claim 1, wherein said particular component is selected to have a boiling temperature lower than those of said other components, and said membrane has a critical surface tension which is greater than a surface tension of said particular component having a lower boiling point and is less than those of the other components, and wherein said permeable membrane (14) is cooled while heating said solution in said solution chamber (12).

4. The method as set forth in claim 1 to 3, wherein said solution chamber (12) is supplied with a gas while said vacuum is applied through said membrane (14) to said solution chamber (12).

**Patentansprüche**

1. Ein verfahren zur Abtrennung einer bestimmten flüssigen Komponente aus einer Lösung, die zwei oder mehrere flüssige Komponenten enthält, wobei besagtes verfahren umfaßt:
   Bereitstellen eines Gefäßes (10), das durch eine permeable Membran (14) in eine Lösungskammer (12) und eine Vakuumkammer (13) aufgeteilt ist;
   Einbringen besagter Lösung in besagte Lösungskammer (12) außer direkten Kontakt mit besagter permeablen Membran (14); und
   Anlegen eines Vakuums an besagte Vakuumkammer (13), um die Lösung in besagter Lösungskammer

8

(12) zu verdampfen und die resultierenden Dämpfe durch besagte permeable Membran (14) in besagte Vakuumkammer (13) zu ziehen, um besagte bestimmte Komponente in einer Dampf/Dampf-Phasenumgebung selektiv durch besagte Membran (14) zu permeieren,
dadurch gekennzeichnet, daß

besagte permeable Membran (14) eine poröse Membran mit Poren von $1 \times 10^{-3}$ bis 5 $\mu$m im mittleren Durchmesser und einer Porosität von wenigstens 5% ist, die so ausgewählt ist, daß sie eine kritische Oberflächenspannung besitzt, die dichter an einer Oberflächenspannung besagter bestimmten Komponente, die abgetrennt werden soll, als diejenigen der anderen Komponenten liegt.

2. Das Verfahren nach Anspruch 1, wobei besagte poröse Membran (14) so ausgewählt ist, daß sie eine kritische Oberflächenspannung besitzt, die größer ist als eine Oberflächenspannung besagter bestimmten Komponente, die abgetrennt werden soll, und niedriger ist als diejenigen der anderen Komponenten.

3. Das Verfahren nach Anspruch 1, wobei besagte bestimmte Komponente so ausgewählt ist, daß sie eine Siedetemperatur besitzt, die niedriger ist als diejenigen von besagten anderen Komponenten, und besagte Membran eine kritische Oberflächenspannung besitzt, die größer ist als eine Oberflächenspannung besagter bestimmten Komponente mit einem niedrigeren Siedepunkt und geringer ist als diejenigen der anderen Komponenten, und wobei besagte permeable Membran (14) gekühlt wird, während besagte Lösung in besagter Lösungskammer (12) erhitzt wird.

4. Das Verfahren nach Anspruch 1 bis 3, wobei besagte Lösungskammer (12) mit einem Gas versorgt wird, während besagtes Vakuum durch besagte Membran (14) an besagte Lösungskammer (12) angelegt wird.

**Revendications**

1. Un procédé pour séparer un composant liquide particulier d'une solution contenant deux ou plusieurs composants liquides, ledit procédé consistant a :
   fournir un récipient (10) divisé par une membrane perméable (14) en une chambre à solution (12) et une chambre à vide (13) ;
   placer ladite solution dans ladite chambre à solution (12) hors d'un contact direct avec ladite membrane perméable (14) ; et
   appliquer un vide à ladite chambre à vide (13) pour évaporer la solution contenue dans ladite chambre à solution (12) et aspirer les vapeurs résultantes dans ladite chambre à vide (13) à travers ladite membrane perméable (14) afin de faire passer sélectivement ledit composant particulier à travers ladite membrane (14) dans une ambiance de phase vapeur à phase vapeur,
   caractérisé en ce que
   ladite membrane perméable (14) est une membrane poreuse ayant des pores d'un diamètre moyen de $1 \times 10^{-3}$ à 5 $\mu$m et une porosité d'au moins 5 %, choisie de manière à avoir une tension superficielle critique qui est plus proche d'une tension superficielle dudit composant particulier à séparer que de celles des autres composants.

2. Le procédé tel que spécifié dans la revendication 1, dans lequel ladite membrane poreuse (14) est choisie pour avoir une tension superficielle critique qui est supérieure à une tension superficielle dudit composant particulier à séparer et inférieure à celles des autres composants.

3. Le procédé tel que spécifié dans la revendication 1, dans lequel ledit composant particulier est choisi pour avoir une température d'ébullition inférieure à celles desdits autres composants, et ladite membrane a une tension superficielle critique qui est supérieure à la tension superficielle dudit composant particulier ayant un plus bas point d'ébullition et inférieure à celles des autres composants, et dans lequel ladite membrane perméable (14) est refroidie tandis que ladite solution est chauffée dans ladite chambre à solution (12).

4. Le procédé tel que spécifié dans les revendications 1 à 3, dans lequel ladite chambre à solution (12) est alimentée avec un gaz tandis que ledit vide est appliqué par l'intermédiaire de ladite membrane (14) à ladite chambre à solution (12).

## Fig. 1

## Fig.2

Fig.3

Supplying amount of air